# EUROPEAN PATENT APPLICATION

(11) **EP 2 881 721 A2**
(43) Date of publication of application: **10.06.2015**
(21) Application number: 14187836.3
(22) Date of filing: 06.10.2014
(51) Int. Cl.: G01L 9/00

(54) **Silicon on nothing pressure sensor**

(30) Priority: 06.11.2013 US 201314072867
(71) Applicant: Honeywell International Inc., Morristown, NJ 07962-2245 (US)
(72) Inventor: Brown, Gregory C., Morristown, NJ New Jersey 07962-2245 (US); Chang, Steve, Morristown, NJ New Jersey 07962-2245 (US)
(74) Representative: Houghton, Mark Phillip

(57) **Abstract**

A method of making a pressure sensing apparatus is provided herein. A plurality of trenches are etched on a first surface of a substrate. The substrate is annealed to form a diaphragm and an embedded cavity from the plurality of trenches, the diaphragm formed of a portion of the substrate wherein an exterior surface of the diaphragm is the first surface of the substrate and an interior surface of the diaphragm is a surface defining the embedded cavity. Piezoresistors are fabricated on the exterior surface of the diaphragm, the piezoresistors configured to change resistivity in response to strain resulting from deflection of the diaphragm. The substrate is mounted, including the diaphragm, in a housing such that a media can apply pressure to the diaphragm and such that the pressure can be sensed by determining a change in the resistivity of the piezoresistors.

## Description

### BACKGROUND

There are three fundamental types of pressure measurements: absolute, gauge, and differential. Absolute pressure sensors measure pressure referenced to a vacuum. Gauge pressure sensors measure pressure referenced to local atmospheric pressure. Differential pressure sensors measure pressure relative to another pressure.

### SUMMARY

A method of making a pressure sensing apparatus is provided herein. A plurality of trenches are etched on a first surface of a substrate. The substrate is annealed to form a diaphragm and an embedded cavity from the plurality of trenches, the diaphragm formed of a portion of the substrate wherein an exterior surface of the diaphragm is the first surface of the substrate and an interior surface of the diaphragm is a surface defining the embedded cavity. Piezoresistors are fabricated on the exterior surface of the diaphragm, the piezoresistors configured to change resistivity in response to strain resulting from deflection of the diaphragm. The substrate is mounted, including the diaphragm, in a housing such that a media can apply pressure to the diaphragm and such that the pressure can be sensed by determining a change in the resistivity of the piezoresistors.

### DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1D illustrate various stages in an example method of making a pressure sensing apparatus.
Figures 2A-2E illustrate various stages in an example method of making a pressure sensing apparatus.
Figure 3 shows a cross-sectional view of an exemplary absolute pressure sensing apparatus made according to the method of Figures 1A-1D.
Figure 4 shows a cross-sectional view of an exemplary pressure sensing apparatus made according to the method of Figures 2A-2E.

In accordance with common practice, the various described features are not drawn to scale but are drawn to emphasize specific features relevant to the exemplary embodiments.

### DETAILED DESPRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specifications is not to be construed as limiting the order in which the individual steps may be performed.

Current silicon based absolute pressure sensors have a challenge of preventing leakage through the interface between the vacuum reference and the outside. Current gauge and differential pressure sensors have an overpressure stop that requires an additional wafer or other additional structure. Additionally, fabrication of these conventional sensors is limited to using thin wafers due to practical etching depth limits and requires the use of a stress isolation pedestal. There is a demand for a pressure sensor and a method of making such pressure sensor where these costs and deficiencies are reduced.

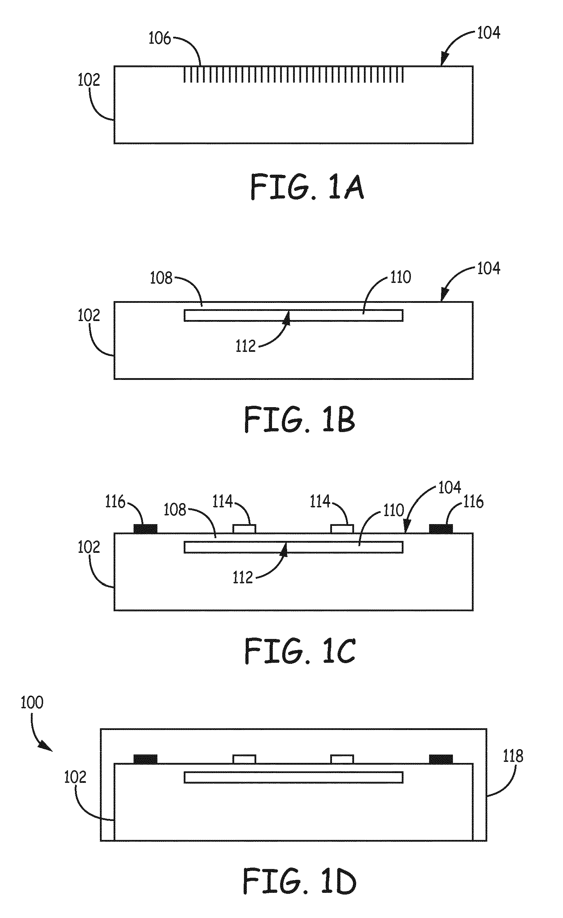

Figures 1A-1D illustrate various stages in an example method of making a pressure sensing apparatus 100. The method can begin with fabrication of a pressure sensing die 101. A pressure sensing die 101 includes a substrate having a diaphragm fabricated therein with piezoresistors on the diaphragm. Fabricating a pressure sensing die 101 is typically a batch process performed at the wafer level. In such a process, a plurality of pressure sensing dies 101 are fabricated simultaneously on a given wafer. The following description and illustrations refer to a single pressure sensing die 101; however, it should be understood that the fabrication process described herein is typically performed multiple times in parallel on a wafer to form a plurality of pressure sensing dies 101.

Fabrication of a pressure sensing die 101 can begin with a substrate 102 (e.g. a silicon wafer). A plurality of trenches 106 are etched in a first surface of the substrate 102.

Figure 1A depicts the substrate 102 after a plurality of trenches is etched on a first surface 104 of the substrate 102. The plurality of trenches 106 can be etched using a variety of methods. In an example, the plurality of trenches 106 are etched using the Bosch process, reactive ion etching, or other etching methods known to the art. The plurality of trenches 106 are etched in order to form a diaphragm 108 and an embedded cavity 110 using a silicon-on-nothing process as described below. The etch depth, width, and length of the plurality of trenches 106 are selected based on the desired size of the diaphragm 108 and the embedded cavity 110. For example, deeper etches may result in a thicker diaphragm 108 and a wider cavity 110, wider etches may result in a thinner diaphragm 108, etc. Additionally, the area on the first surface of the substrate in which the plurality of trenches 106 are disposed is selected based on the desired size of the diaphragm 108 and the embedded cavity 110 within the substrate 102. For example, to fabricate a larger diaphragm, the plurality of trenches 106 are formed over a larger area. Moreover, the shape of the area in which the plurality of trenches 106 are disposed is also selected based on the desired shape of the diaphragm 108 and embedded cavity 110. In an example, the area of the plurality of trenches 106 is substantially circular. In another example, the area of the plurality of trenches 106 is rectangular. The distance between trenches can also affect the dimensions of the diaphragm 108 and the embedded cavity 110.

Once the plurality of trenches 106 are etched, the substrate 102 is annealed to form the diaphragm 108 and the embedded cavity 110 from the plurality of trenches 106. Figure 1B depicts the substrate 102 after it is annealed. In an example, the annealing is performed at high temperature in a deoxidizing ambient. In an example, the deoxidizing ambient is a hydrogen ambient. In an example, the percentage of hydrogen content in the ambient ranges from 2% to 100%. In an example, the annealing takes place at temperatures between 800°C and 1250°C. The annealing can be performed at high pressure, atmospheric pressure, or in a vacuum.

During the annealing process, a self-organizing migration of silicon occurs that forms the diaphragm 108 and an embedded cavity 110 in the substrate 102. In particular, the migration of the silicon causes the silicon towards the bottom (interior) of the trenches 106 to migrate up to fill the top (exterior) portions of the trenches 106 resulting in a solid silicon structure proximate the first surface 104 with a space internal to the substrate 102 below (interior to) the solid silicon structure. The solid silicon structure is the diaphragm 108 which is formed of a portion of the substrate 102 and extends from the first surface 104 to the embedded cavity 110. The space is the embedded cavity 110. Such a diaphragm 108 and embedded cavity 110 can be referred to as a silicon-on-nothing structure. The exterior surface 104 of the diaphragm 108 is the first surface 104 of the substrate 102. The interior surface 112 of the diaphragm 108 is a surface defining the embedded cavity 110.

As the substrate 102 cools after annealing, the pressure in the embedded cavity 110 reduces from its pressure at the peak temperature of annealing. By taking this into account, the pressure inside the embedded cavity 110, after it is formed, can be controlled by selecting the appropriate temperature and external pressure during the annealing process. After annealing, there may be residue hydrogen remaining in the embedded cavity 110. In an example, the residue hydrogen is removed by an additional annealing process.

Once the diaphragm 108 and embedded cavity 110 are formed, a plurality of piezoresistors 114 are fabricated on the exterior surface 104 of the diaphragm 108. Figure 1C depicts the substrate 102 after fabrication of the piezoresistors 114. In an example, the piezoresistors 114 are fabricated by doping the exterior surface 104 of the diaphragm 108 with boron. The piezoresistors 114 are deposited at areas on the exterior surface 104 of the diaphragm 108 such that the deflection of the diaphragm 108 results in a change in the strain on the piezoresistors 114. The piezoresistors 114 are configured to change resistivity in response to the deflection of the diaphragm 108. In an example, the piezoresistors 114 are deposited in the Wheatstone bridge configuration. In an example, there are two sets of piezoresistors in the Wheatstone bridge configuration deposited on the top surface 104 of the diaphragm 108.

The substrate 102 may also undergo metallization, and Figure 1C also depicts the substrate 102 after die metallization interconnects 116 are fabricated on the exterior surface 104 of the substrate 102. In an example, the die metallization interconnects 116 are composed of copper. The die metallization interconnects 116 provide a means of outputting a signal corresponding to a change in resistivity experienced by the piezoresistors 114.

Once the pressure sensing die 101 is fabricated, the pressure sensing die 101 can be mounted to a housing 118. Figure 1D depicts the pressure sensing apparatus 100 after the substrate 102 is mounted to the housing 118. The substrate 102 is mounted to the housing 118 such that a media can apply pressure to the diaphragm 108 and such that the pressure applied by the media on the diaphragm 108 can be sensed by determining a change in the resistivity of the piezoresistors 114. Advantageously, forming the diaphragm 108 and the embedded cavity 110 using the above described silicon-on-nothing process enables the cavity 110 to be formed without requiring a large etch in the backside (surface reverse of surface 104) of the substrate 102, as is common for conventional pressure sensors. Since a large etch is not required, the substrate 102 for the pressure sensing die 101 can be substantially thicker than substrates used for conventional pressure sensing dies. For example, the substrate 102 can have a thickness of one-quarter inch. Since a thicker substrate can be used, in some examples, the pressure sensing die 101 does not need to be hermetically sealed to a stress isolation member (also referred to as a "pedestal"), such as Pyrex glass, as is common for conventional pressure sensors. The use of a thicker substrate can also enable the substrate 102 to be mounted to the housing 118 using a low tech bonding technique. For example, the substrate 102 can be mounted to the housing 118 by placing an epoxy between the substrate 102 and the housing 118 and curing the epoxy.

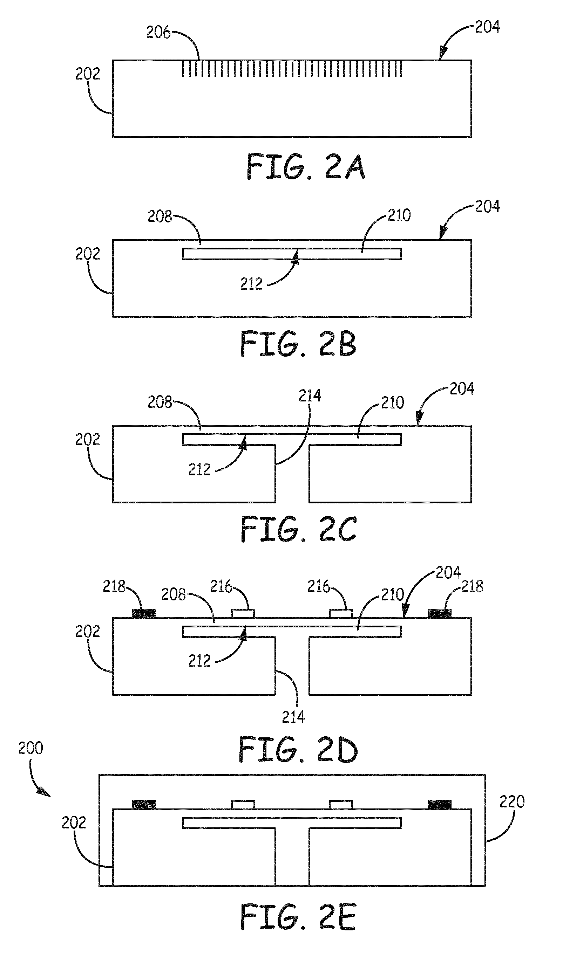

Figures 2A-2E illustrate various stages in an example method of making a pressure sensing apparatus 200. The method can begin with fabrication of a pressure sensing die 201. A pressure sensing die 201 includes a substrate having a diaphragm fabricated therein with piezoresistors on the diaphragm. Fabricating a pressure sensing die 201 is typically a batch process performed at the wafer level. In such a process, a plurality of pressure sensing dies 201 are fabricated simultaneously on a given wafer. The following description and illustrations refer to a single pressure sensing die 201; however, it should be understood that the fabrication process described herein is typically performed multiple times in parallel on a wafer to form a plurality of pressure sensing dies 201.

Fabrication of a pressure sensing die 201 can begin with a substrate 202 (e.g. a silicon wafer). A plurality of trenches 206 are etched in a first surface of the substrate 202.

Figure 2A depicts the substrate 202 after a plurality of trenches are etched on a first surface 204 of the substrate 202. The plurality of trenches 206 can be etched using a variety of methods. In an example, the plurality of trenches 206 are etched using the Bosch process, reactive ion etching, or other etching methods known to the art. The plurality of trenches 206 are etched in order to form a diaphragm 208 and an embedded cavity 210 using a silicon-on-nothing process as described below. The etch depth, with, and length of the plurality of trenches 206 are selected based on the desired size of the diaphragm 208 and the embedded cavity 210. For example, deeper etches may result in a thicker diaphragm 208 and a wider embedded cavity 210, wider etches may result in a thinner diaphragm 208, etc. Additionally, the area on the first surface of the substrate in which the plurality of trenches 206 are disposed is selected based on the size of the diaphragm 208 and the embedded cavity 210 within the substrate 202. For example, to fabricate a larger diaphragm 208, the plurality of trenches 206 are formed over a larger area. Moreover, the shape of the area in which the plurality of trenches 206 are disposed is also selected based on the desired shape of the diaphragm 208 and the embedded cavity 210. In an example, the area of the plurality of trenches 206 is substantially circular. In another example, the area of the plurality of trenches 206 is rectangular. The distance between trenches also affects the dimensions of the diaphragm 208 and the embedded cavity 210.

Once the plurality of trenches 206 are etched, the substrate is annealed to form the diaphragm 208 and the embedded cavity 210 from the plurality of trenches 206. Figure 2B depicts the substrate 202 after it is annealed. In an example, the annealing is performed at high temperature in a deoxidizing ambient. In an example, the deoxidizing ambient is a hydrogen ambient. In an example, the percentage of hydrogen content in the ambient ranges from 2% to 100%. In an example, the annealing takes place at temperatures between 800°C and 1250°C. The annealing can be performed at high pressure, atmospheric pressure, or in a vacuum.

During the annealing process, a self-organizing migration of silicon occurs that forms the diaphragm 208 and an embedded cavity 210 in the substrate 202. In particular, the migration of the silicon causes the silicon towards the bottom (interior) of the trenches 206 to migrate up to fill the top (exterior) portions of the trenches 206 resulting in a solid silicon structure proximate the first surface 204 with a space internal to the substrate 202 below (interior to) the solid silicon structure. The solid silicon structure is the diaphragm 208 which is formed of a portion of the substrate 202 and extends from the first surface 204 to the embedded cavity 210. The space is the embedded cavity 210. Such a diaphragm 208 and embedded cavity 210 can be referred to as a silicon-on-nothing structure. The exterior surface 204 of the diaphragm 208 is the first surface 204 of the substrate 202. The interior surface of the diaphragm 212 is a surface defining the embedded cavity 210.

As the substrate 202 cools after annealing, the pressure in the embedded cavity 210 reduces from its pressure at the peak temperature of annealing. By taking this into account, the pressure inside the embedded cavity 210, after it is formed, can be controlled by selecting the appropriate temperature and external pressure during the annealing process. After annealing, there may be residue hydrogen remaining in the embedded cavity 210. In an example, the residue hydrogen is removed by an additional annealing process.

After the diaphragm 208 and the embedded cavity 210 are formed, a pressure port 214 is etched in the backside (surface reverse of surface 204) of the substrate 202. Figure 2C depicts the substrate 202 after the pressure port 214 is etched in the substrate 202. The pressure port 214 is etched from the backside of the substrate 202 to the embedded cavity 210. The pressure port 214 enables fluid communication between the embedded cavity 210 and the external environment proximate the backside of the substrate 202. Etching the pressure port 214 comprises etching a through-hole from the backside of the substrate to the embedded cavity 210. Etching is stopped before the through-hole extends through the diaphragm 208 to maintain the integrity of the diaphragm. The through-hole has a diameter that is substantially smaller than the diameter/width of the embedded cavity 210. In an example, the through-hole has a diameter that is one-tenth the diameter of the embedded cavity 210. In an example, etching includes etching a plurality of pressure ports 214 accessing the embedded cavity 210 in different locations. The pressure port 214 can be etched using a variety of methods. In an example, the pressure port 214 is etched using the Bosch process, reactive ion etching, or other etching methods known to the art. The pressure port 214 is etched for a gauge or differential pressure sensing apparatus, not an absolute pressure sensing apparatus. In an example, the pressure port 214 can be positioned to expose any part of the embedded cavity 210 to another pressure. In an example, the pressure port is centered with reference to the embedded cavity 210.

Once the pressure port 214 is formed, a plurality of piezoresistors 216 are fabricated on the exterior surface 204 of the diaphragm 208. Figure 2D depicts the substrate 202 after fabrication of the plurality of piezoresistors 216. In an example, the piezoresistors 216 are fabricated by doping the exterior surface 204 of the diaphragm 208 with boron. The piezoresistors 216 are deposited at areas on the exterior surface 204 of the diaphragm 208 such that the deflection of the diaphragm 208 results in a change in the strain on the piezoresistors 216. The piezoresistors 216 are configured to change resistivity in response to the deflection of the diaphragm 208. In an example, the piezoresistors 216 are deposited in the Wheatstone bridge configuration. In an example, there are two sets of piezoresistors 216 in the Wheatstone bridge configuration deposited on the top surface 204 of the diaphragm 208.

The substrate 202 may also undergo metallization, and Figure 2D also depicts the substrate 202 after die metallization interconnects 218 are fabricated on the top surface 204 of the substrate 202. In an example, the die metallization interconnects 218 are composed of copper. The die metallization interconnects provide a means of outputting a signal corresponding to a change in resistivity experienced by the piezoresistors 114. The pressure can then be calculated from this signal.

Once the pressure sensing die 201 is fabricated, the pressure sensing die 201 can be mounted to a housing 220. Figure 2E depicts the pressure sensing apparatus 200 after the substrate 202 is mounted to the housing 220. The substrate 202 is mounted to the housing 220 such that a media can apply pressure to the diaphragm 208 and such that the pressure applied by the media on the diaphragm 208 can be sensed by determining a change in the resistivity of the piezoresistors 216. Advantageously, forming the diaphragm 208 and the embedded cavity 210 using the above described silicon-on-nothing process enables the embedded cavity 210 to be formed without requiring a large etch in the backside of the substrate 202 as is common for conventional pressure sensors. Since a large etch is not required, the substrate 202 for the pressure sensing die 201 can be substantially thicker than substrates used for conventional pressure sensing dies. For example, the substrate 202 can have a thickness of one-quarter inch. Since a thicker substrate can be used, in some examples, the pressure sensing die 201 does not need to be hermetically sealed to a stress isolation member (also referred to as a "pedestal"), such as Pyrex glass, as is common for conventional pressure sensors. The use of a thicker substrate can also enable the substrate 202 to be mounted to the housing 220 using a low tech bonding technique. For example, the substrate 202 can be mounted to the housing 220 by placing an epoxy between the substrate 202 and the housing 220 and curing the epoxy.

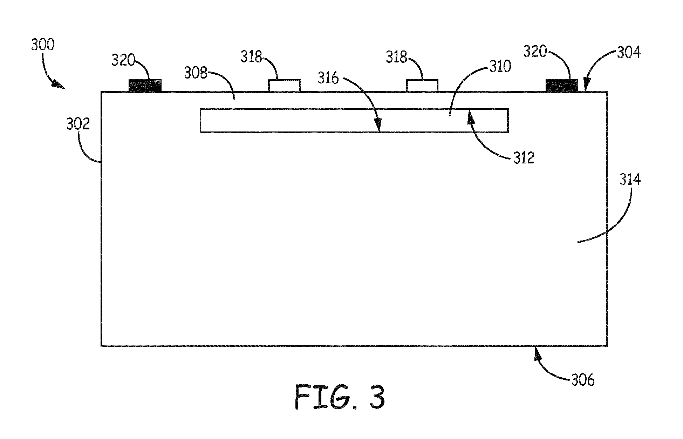

Figure 3 is a cross-sectional view of an exemplary absolute pressure sensing die 300 made according to the method of Figures 1A-1C. The absolute pressure sensing die 300 includes a monolithic substrate 302. The monolithic substrate 302 has a first working surface 304 and a second surface 306 that is reverse of the first working surface 304. In an example, the monolithic substrate 302 is composed of silicon. In an example, the monolithic substrate 302 is one-quarter inch thick. The use of this larger thickness monolithic substrate 302 is made possible because of the reduced etching when using the method of Figures 1A-1C described above as compared to conventional pressure sensing die.

The absolute pressure sensing die 300 includes a diaphragm 308 above an embedded cavity 310. The diaphragm 308 has an exterior surface 304 and an interior surface 312. The exterior surface 304 of the diaphragm 308 is the first working surface 304 of the monolithic substrate 302. The diaphragm 308 is part of the monolithic substrate 302. In an example, the diaphragm 308 is composed of silicon. In an example, the diaphragm has a generally planar geometry. The dimensions of the diaphragm 308 are determined by the trenches that are etched as shown in Figure 1A. In an example, the diaphragm 308 is approximately 0.1um to several um thick. In another example, the diaphragm 308 is 0.001 inches thick. As viewed from the first working surface 304, the diaphragm 308 can have any appropriate shape, such as a circle or a rectangle. In an example, the diaphragm 308 is substantially circular and has a diameter between 0.05 inches and the diameter of the die. In an example, the diaphragm 308 is rectangular and has dimensions ranging between 0.03inches x 0.045inches and the maximum that would fit on the die.

The absolute pressure sensing die 300 includes an embedded cavity 310 within the monolithic substrate 302. The embedded cavity 310 is defined by the interior surface 312 of the diaphragm 308 and a bulk 314 of the monolithic substrate 302. The embedded cavity 310 has a top surface 312 and a bottom surface 316. The top surface of the embedded cavity 310 is the interior surface 312 of the diaphragm 308. The bottom surface 316 of the embedded cavity 310 is a surface of the bulk 314 of the monolithic substrate 302. In an example, the embedded cavity 310 has a generally planar geometry. In an example, the embedded cavity 310 is substantially circular and is defined by the dimensions of diameter and depth. In another example, the embedded cavity 310 is rectangular and is defined by the dimensions of length, width, and depth. Depth is the distance between the top surface 312 and bottom surface 316 of the embedded cavity 310. These dimensions will be determined by the properties of the trenches 106 that are etched to form the embedded cavity 310 as described above with reference to Figure 1A. In an example, the depth of the embedded cavity 310 is approximately 1 to 1.75 times the thickness of the diaphragm 308. In an example, the diameter of the embedded cavity 310 is at least 1.5 times the depth of the embedded cavity 310.

The embedded cavity 310 operates as an integral vacuum reference for the absolute pressure sensing die 300. The diaphragm 308 is part of the substrate 302, so no bonding is required to seal the embedded cavity 310 and prevent leakage through the diaphragm 308.

In operation, the diaphragm 308 of the absolute pressure sensing die 300 may experience an overpressure event. An overpressure event is when a pressure is applied that is over and above the normal operating pressure. Without an overpressure stop, the diaphragm 308 of the absolute pressure sensing die 300 could break during an overpressure event. However, the bottom surface 316 of the embedded cavity 310 of the pressure sensing apparatus 300 operates as an integral overpressure stop. Specifically, the bottom surface 316 of the embedded cavity 310 will prevent the diaphragm 308 from deflecting too far during an overpressure event. The depth of the embedded cavity 310 is chosen to be an amount that will allow the diaphragm 308 to deflect in the desired operating pressure range, but no farther. In an example the depth of the embedded cavity 310 is selected such that diaphragm 308 contacts the bottom surface 316 at about three times the normal operating pressure.

The absolute pressure sensing die 300 includes a plurality of piezoresistors 318 on the top surface 304 of the diaphragm 308. In an example, the piezoresistors 318 are disposed on the top surface 304 of the diaphragm 308 in a Wheatstone bridge configuration. When the diaphragm 308 deflects, the piezoresistors 318 experience a change in resistivity. This change in resistivity is detected and the external pressure on the absolute pressure sensing die 300 can be calculated.

The absolute pressure sensing die 300 includes die metallization interconnects 320. In an example, the die metallization interconnects 320 are composed of copper. The die metallization interconnects 320 provide a means of outputting a signal corresponding to a change in resistivity experienced by the piezoresistors 318.

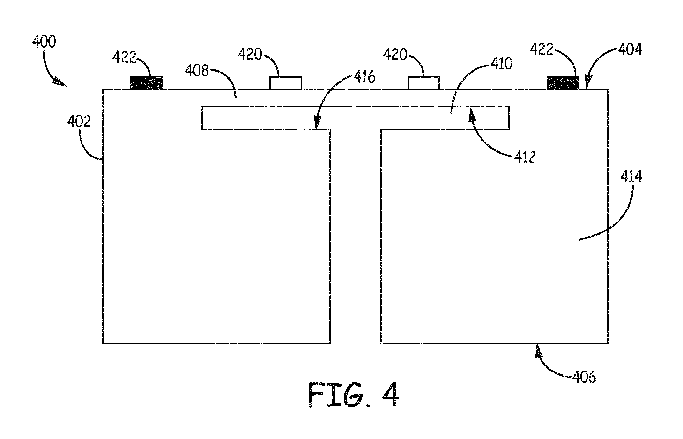

Figure 4 is a cross-sectional view of an exemplary pressure sensing die 400 made according to the method of Figures 2A-2D. The pressure sensing die 400 includes a monolithic substrate 402. The monolithic substrate has a first working surface 404 and a second surface 406 (also referred to herein as the "backside") that is reverse of the first working surface 404. In an example, the monolithic substrate 402 is composed of silicon. In an example, the monolithic substrate 402 is one-quarter inch thick. The use of this larger thickness monolithic substrate 402 is made possible because of the reduced etching when using the method of Figures 2A-2D described above as compared to conventional pressure sensing die.

The pressure sensing die 400 includes a diaphragm 408 above an embedded cavity 410. The diaphragm 408 has an exterior surface 404 and an interior surface 412. The exterior surface 404 of the diaphragm 408 is the first working surface 404 of the monolithic substrate 402. The diaphragm 408 is part of the monolithic substrate 402. In an example, the diaphragm 408 is composed of silicon. In an example, the diaphragm 408 has a generally planar geometry. The dimensions of the diaphragm 408 are determined by the trenches that are etched as shown in Figure 2A. In an example, the diaphragm 408 is approximately 0.1um to several um thick. In another example, the diaphragm is 0.001 inches thick. As viewed from the top of the working surface 404, the diaphragm 408 can have any appropriate shape, such as a circle or a rectangle. In an example, the diaphragm 408 is substantially circular and has a diameter between 0.05 inches and the diameter of the die. In an example, the diaphragm 408 is rectangular and has dimensions ranging between 0.03inches x 0.045inches and the maximum that would fit on the die.

The pressure sensing die 400 includes an embedded cavity 410 within the monolithic substrate 402. The embedded cavity 410 is defined by the interior surface 412 of the diaphragm 408 and a bulk 414 of the monolithic substrate 402. The embedded cavity 410 has a top surface 412 and a bottom surface 416. The top surface of the embedded cavity 410 is the interior surface 412 of the diaphragm 404. The bottom surface 416 of the embedded cavity 410 is a surface of the bulk 414 of the monolithic substrate 402. In an example, the embedded cavity 410 has a generally planar geometry. The embedded cavity 410 is substantially circular and is defined by the dimensions of diameter and depth. In another example, the embedded cavity 410 is rectangular and is defined by the dimensions of length, width, and depth. Depth is the distance between the top surface 412 and bottom surface 416 of the embedded cavity 410. These dimensions will be determined by the properties of the trenches 206 that are etched to form the embedded cavity 410 as described above with reference to Figure 2A. In an example, the depth of the embedded cavity 410 is approximately 1 to 1.75 times the thickness of the diaphragm 408. In an example, the diameter of the embedded cavity 410 is at least 1.5 times the depth of the embedded cavity 410.

The pressure sensing die 400 includes a pressure port 418 from the embedded cavity 410 to the second surface 406 of the monolithic substrate 402. The pressure port 418 extends through the bulk 414 of the substrate 402 from the second surface 406 to the embedded cavity 410. The pressure port 418 enables fluid communication between the embedded cavity 410 and the external environment proximate the second surface 406 of the substrate 402. The pressure port 418 has a diameter that is substantially smaller than the diameter/width of the embedded cavity 410, where the diameter of the pressure port 418 is the distance across the pressure port 418 from the bulk 414 on one side to the bulk 414 on the opposite side. In an example, the through-hole has a diameter that is one-tenth the diameter of the embedded cavity 410. The pressure port 418 can be fabricated using a variety of methods known in the art. In an example, the pressure port 418 is centered with reference to the embedded cavity 410. In an example where the pressure sensing die 400 is used to measure gauge pressure, the pressure port 418 is exposed to atmospheric pressure. In an example where the pressure sensing die 400 is used to measure differential pressure, the pressure port 418 is exposed to a reference chamber having a defined pressure therein. Although a single pressure port 418 is shown in Figure 4, the pressure sensing die 400 can include more than one pressure port 418 each pressure port 418 accessing the embedded cavity 410 in a different location.

In operation, the diaphragm 408 of the pressure sensing die 400 may experience an overpressure event. An overpressure event is when a pressure is applied that is over and above the normal operating pressure. Without an overpressure stop, the diaphragm 408 of the pressure sensing die 400 could break during an overpressure event. However, the bottom surface 416 of the embedded cavity 410 of the pressure sensing die 400 operates as an integral overpressure stop. Specifically, the bottom surface 416 of the embedded cavity 410 will prevent the diaphragm 408 from deflecting too far during an overpressure event. The depth of the embedded cavity 410 is chosen to be an amount that will allow the diaphragm 408 to deflect in the desired operating pressure range, but no farther. In an example, the depth of the embedded cavity 410 is selected such that the diaphragm 408 contacts the bottom surface 416 at about three times the normal operating pressure.

The pressure sensing die 400 includes a plurality of piezoresistors 420 on the top surface 404 of the diaphragm 408. In an example, the piezoresistors 420 are disposed on the top surface 404 of the diaphragm 408 in a Wheatstone bridge configuration. When the diaphragm 408 deflects, the piezoresistors 420 experience a change in resistivity. This change in resistivity is proportional to the pressure difference and the external pressure on the pressure sensing die 400 can be calculated.

The pressure sensing die 400 includes die metallization interconnects 422. In an example, the die metallization interconnects are composed of copper. The die metallization interconnects 422 also provide a means of outputting a change in resistivity experienced by the piezoresistors 420.

Although specific embodiments have been illustrated and described herein, it will be appreciated by those of skill in the art that any arrangement, which is calculated to achieve the same purpose, may be substituted for the specific embodiments shown. Therefore, it is manifestly intended that this invention be limited only by the claims and equivalents thereof.

### Example Embodiments

Example 1 includes a method of making a pressure sensing apparatus from a substrate comprising: etching a plurality of trenches on a first, surface of a substrate; annealing the substrate to form a diaphragm and an embedded cavity from the plurality of trenches, the diaphragm formed of a portion of the substrate wherein an exterior surface of the diaphragm is the first surface of the substrate and an interior surface of the diaphragm is a surface defining the embedded cavity; fabricating piezoresistors on the exterior surface of the diaphragm, the piezoresistors configured to change resistivity in response to strain resulting from deflection of the diaphragm; and mounting the substrate including the diaphragm in a housing such that a media can apply pressure to the diaphragm and such that the pressure can be sensed by determining a change in the resistivity of the piezoresistors.

Example 2 includes the method of Example 1, wherein the annealing is performed using a hydrogen ambient.

Example 3 includes the method of any of Examples 1-2, further comprising fabricating a pressure port extending from a second surface of the substrate to the embedded cavity.

Example 4 includes the method of Example 3, wherein the port is centered relative to the embedded cavity.

Example 5 includes the method of any of Examples 1-4, further comprising forming die metallization interconnects, wherein the interconnects are configured to provide an electrical pathway between the piezoresistors and the housing.

Example 6 includes the method of any of Examples 1-5, wherein the annealing is performed at vacuum pressure such that a vacuum is formed in the embedded cavity.

Example 7 includes the method of any of Examples 1-6, wherein mounting the substrate includes placing an epoxy between the substrate and the housing, and curing the epoxy to mount the substrate to the housing.

Example 8 includes the method of any of Examples 1-7, wherein etching a plurality of trenches includes etching trenches in a circular area, such that the diaphragm and the embedded cavity have a substantially circular shape.

Example 9 includes the method of any of Examples 1-8, wherein etching a plurality of trenches includes etching trenches in a rectangular area, such that the diaphragm and the embedded cavity have a rectangular shape.

Example 10 includes the method of any of Examples 1-9, wherein etching a plurality of trenches includes etching trenches such that the embedded cavity has a depth that is approximately 1 to 1.75 times the thickness of the diaphragm.

Example 11 includes a pressure sensing apparatus comprising: a monolithic substrate having a first working surface and a second surface reverse of the first working surface, the substrate defining: a diaphragm, wherein an exterior surface of the diaphragm is the first working surface of the substrate; and an embedded cavity, wherein an interior surface of the diaphragm and a bulk of the substrate define the embedded cavity, wherein the bulk defines a bottom surface of the embedded cavity, the bottom surface opposite the interior surface of the diaphragm, the bottom surface disposed such that the diaphragm contacts the bottom surface during elastic deflection to reduce further deflection; a plurality of piezoresistors on the exterior surface of the diaphragm, the plurality of piezoresistors configured to change resistivity in response to strain resulting from deflection of the diaphragm; and a housing, wherein the substrate is mounted to the housing such that a media can apply pressure to the diaphragm and such that the pressure can be sensed by determining a change in the resistivity of the piezoresistors.

Example 12 includes the pressure sensing apparatus of Example 11, wherein the embedded cavity maintains a vacuum.

Example 13 includes the pressure sensing apparatus of any of Examples 11-12, wherein the diaphragm comprises a silicon-on-nothing structure.

Example 14 includes the pressure sensing apparatus of any of Examples 11-13, wherein the depth of the embedded cavity is 1 to 1.75 times the thickness of the diaphragm, wherein the travel of the diaphragm is limited if exposed to an overpressure event.

Example 15 includes the pressure sensing apparatus of any of Examples 11-14, wherein the plurality of piezoresistors are in the Wheatstone bridge configuration.

Example 16 includes the pressure sensing apparatus of any of Examples 11-15, wherein the substrate defines a port extending from the second surface of the substrate to the embedded cavity; wherein the housing defines a reference pressure volume communicating with the embedded cavity through the port.

Example 17 includes the pressure sensing apparatus of Example 16, wherein the port is centered relative to the embedded cavity.

Example 18 includes the pressure sensing apparatus of any of Examples 11-17, wherein the bottom surface of the embedded cavity is an overpressure stop for the diaphragm that is part of the monolithic substrate.

Example 19 includes the pressure sensing apparatus of any of Examples 11-18, wherein the diaphragm has a generally planar geometry and is connected to the bulk at the perimeter thereof, wherein the exterior surface and the interior surface of the diaphragm are the two major surfaces of the planar geometry, and wherein the embedded cavity has a generally planar geometry matching the geometry of the diaphragm.

Example 20 includes a method of making a pressure sensing apparatus from a substrate comprising: etching a plurality of trenches on a first surface of a substrate; annealing the substrate to form an embedded cavity and a diaphragm from the plurality of trenches, the diaphragm formed of a portion of the substrate wherein an exterior surface of the diaphragm is the first surface of the substrate and an interior surface of the diaphragm is a surface defining the embedded cavity; fabricating a pressure port extending from a second surface of the substrate to the embedded cavity; fabricating piezoresistors on the exterior surface of the diaphragm, the piezoresistors configured to change resistivity in response to strain resulting from deflection of the diaphragm; and mounting the substrate including the diaphragm in a housing such that a media can apply pressure to the diaphragm and such that the pressure can be sensed by determining a change in the resistivity of the piezoresistors.

## Claims

1. A method of making a pressure sensing apparatus (100, 200, 300, 400) from a substrate (102, 202, 302, 402) comprising:
etching a plurality of trenches (106, 206) on a first surface (104, 204, 304, 404) of a substrate (102, 202, 302, 402);
annealing the substrate (102, 202, 302, 402) to form a diaphragm (108, 208, 308, 408) and an embedded cavity (110, 210, 310, 410) from the plurality of trenches (106, 206), the diaphragm (108, 208, 308, 408) formed of a portion of the substrate (102, 202, 302, 402) wherein an exterior surface (104, 204, 304, 404) of the diaphragm (108, 208, 308, 408) is the first surface (104, 204, 304, 404) of the substrate (102, 202, 302, 402) and an interior surface (112, 212, 312, 412) of the diaphragm (108, 208, 308, 408) is a surface defining the embedded cavity (110, 210, 310,410);
fabricating piezoresistors (114, 216, 318, 420) on the exterior surface (104, 204, 304, 404) of the diaphragm (108, 208, 308, 408), the piezoresistors (114, 216, 318, 420) configured to change resistivity in response to strain resulting from deflection of the diaphragm (108, 208, 308, 408); and
mounting the substrate (102, 202, 302, 402) including the diaphragm (108, 208, 308, 408) in a housing (118, 220) such that a media can apply pressure to the diaphragm (108, 208, 308, 408) and such that the pressure can be sensed by determining a change in the resistivity of the piezoresistors (114, 216, 318, 420).

2. The method of claim 1, wherein the annealing is performed using a hydrogen ambient.

3. The method of claim 1, further comprising fabricating a pressure port (214, 418) extending from a second surface (406) of the substrate (202, 402) to the embedded cavity (210, 410).

4. The method of claim 1, wherein the annealing is performed at vacuum pressure such that a vacuum is formed in the embedded cavity (110, 210, 310, 410).

5. A pressure sensing apparatus (100, 200, 300, 400) comprising:
a monolithic substrate (102, 202, 302, 402) having a first working surface (104, 204, 304, 404) and a second surface (306, 406) reverse of the first working surface (104, 204, 304, 404), the substrate (102, 202, 302, 402) defining:
a diaphragm (108, 208, 308, 408), wherein an exterior surface (104, 204, 304, 404) of the diaphragm (108, 208, 308, 408) is the first working surface (104, 204, 304, 404) of the substrate (102, 202, 302, 402); and
an embedded cavity (110, 210, 310, 410), wherein an interior surface (112, 212, 312, 412) of the diaphragm (108, 208, 308, 408) and a bulk (314, 414) of the substrate (102, 202, 302, 402) define the embedded cavity (110, 210, 310, 410), wherein the bulk (314, 414) defines a bottom surface (316, 416) of the embedded cavity (110, 210, 310, 410), the bottom surface (316, 416) opposite the interior surface (112, 212, 312, 412) of the diaphragm (108, 208, 308, 408), the bottom surface (316, 416) disposed such that the diaphragm (108, 208, 308, 408) contacts the bottom surface during elastic deflection to reduce further deflection;
a plurality of piezoresistors (114, 216, 318, 420) on the exterior surface (104, 204, 304, 404) of the diaphragm (108, 208, 308, 408), the plurality of piezoresistors (114, 216, 318, 420) configured to change resistivity in response to strain resulting from deflection of the diaphragm (108, 208, 308, 408); and
a housing (118, 220), wherein the substrate (102, 202, 302, 402) is mounted to the housing (118, 220) such that a media can apply pressure to the diaphragm (108, 208, 308, 408) and such that the pressure can be sensed by determining a change in the resistivity of the piezoresistors (114, 216, 318, 420).

6. The pressure sensing apparatus (100, 200, 300, 400) of claim 5, wherein the diaphragm (108, 208, 308, 408) comprises a silicon-on-nothing structure.

7. The pressure sensing apparatus of claim 5, wherein the depth of the embedded cavity (110, 210, 310, 410) is 1 to 1.75 times the thickness of the diaphragm (108, 208, 308, 408),
wherein the travel of the diaphragm (108, 208, 308, 408) is limited if exposed to an overpressure event.

8. The pressure sensing apparatus (200, 400) of claim 5, wherein the substrate (202, 402) defines a port (214, 418) extending from the second surface of the substrate (202, 402) to the embedded cavity (210, 410), wherein the port (214, 418) is centered relative to the embedded cavity (210, 410);
wherein the housing (220) defines a reference pressure volume communicating with the embedded cavity (210, 410) through the port (214, 418).

9. The pressure sensing apparatus (100, 200, 300, 400) of claim 5, wherein the bottom surface of the embedded cavity (110, 210, 310, 410) is an overpressure stop for the diaphragm (108, 208, 308, 408) that is part of the monolithic substrate (102, 202, 302, 402).

10. The pressure sensing apparatus (100, 200, 300, 400) of claim 5, wherein the diaphragm (108, 208, 308, 408) has a generally planar geometry and is connected to the bulk at the perimeter thereof, wherein the exterior surface (104, 204, 304, 404) and the interior surface (112, 212, 312, 412) of the diaphragm (108, 208, 308, 408) are the two major surfaces of the planar geometry, and
wherein the embedded cavity (110, 210, 310, 410) has a generally planar geometry matching the geometry of the diaphragm (108, 208, 308, 408).
